# EUROPÄISCHE PATENTSCHRIFT

(11) **EP 0 442 300 B1**
(45) Veröffentlichungstag und Bekanntmachung des Hinweises auf die Patenterteilung: **08.03.1995**
(21) Anmeldenummer: 91100874.6
(22) Anmeldetag: 24.01.1991
(51) Int. Cl.: C07F 5/06

(54) **Verfahren zur Herstellung von Lösungen oligomerer Methylaluminoxane**
Process for the preparation of solutions of oligomeric methylaluminoxanes
Procédé de préparation de solutions de méthylaluminoxanes oligomériques

(30) Priorität: 14.02.1990 DE 4004477
(43) Veröffentlichungstag der Anmeldung: 21.08.1991
(73) Patentinhaber: Witco GmbH, 59180 Bergkamen (DE)
(72) Erfinder: Graefe, Jürgen, Dr. Dipl.-Chem., W-8261 Kirchweidach (DE); Gürtzgen, Stefan, Dr. Dipl.-Chem., W-5600 Wuppertal 21 (DE); Müller, Karl-Heinz, Dr. Dipl.-Chem., W-4712 Werne (DE); Schneider, Jürgen, Dipl.-Ing. (FH), W-4750 Unna (DE); Schrader, Rolf, Dr. Dipl.-Chem., W-4750 Unna (DE)

(56) Entgegenhaltungen:
- EP-A- 0 257 695
- US-A- 4 772 736

## Beschreibung

Die Erfindung betrifft die Herstellung von Lösungen oligomerer, gegebenenfalls höhere Alkylgruppen enthaltender Methylaluminoxane, die Trimethylaluminium in freier und/oder komplexierter Form enthalten; als Lösungsmittel dienen dabei aliphatische, cycloaliphatische oder aromatische Kohlenwasserstoffe.

Längerkettige oligomere und/oder polymere Alkylaluminoxane der vereinfachten Strukturen 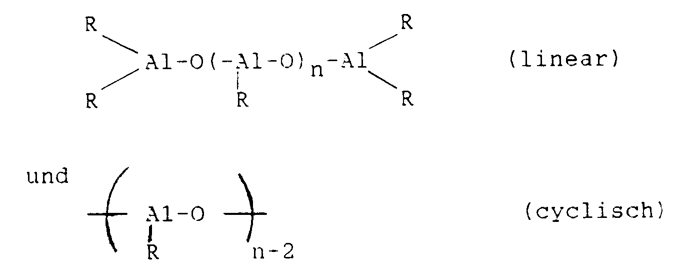
sind bekannte Verbindungen, die als Katalysator-Komponenten bei der Herstellung hochaktiver Polyolefin-Katalysatoren verwendet werden, wobei zum Teil oligomere Methylaluminoxane (MAO) mit R = CH₃ als bevorzugt genannt werden (DE-A-30 07 725, EP-B-0 069 951, DE-A-32 40 382, EP-A-0 170 059, DE-A-34 43 087, EP-B-0 128 046, US-A-4 665 046, EP-A-0 232 595, US-A-4 668 838, US-A-4 665 047, EP-A-0 241 560, WO 87/03887, EP-A-0 237 294).

Als bekanntes Herstellungsverfahren für Alkylaluminoxane wird dabei die Umsetzung von Aluminiumtrialkylen mit Wasser in inerten Kohlenwasserstoffen genannt. Hauptsächlich werden zur Herstellung von oligomeren Methylaluminoxanen (MAO) aus Trimethylaluminium (TMA) aber andere Methoden als bevorzugt genannt, da aus der Literatur bekannt ist, daß sich nach der z. B. in US-A-3 242 099 näher beschriebenen Herstellungsweise durch langsame Zugabe von Wasser zu Trimethylaluminium (TMA) MAO nur schwer und in sehr schlechter Ausbeute herstellen läßt (EP-A-0 108 339); zudem werden dabei Produkte erhalten, die zusammen mit der Übergangsmetall-Komponente keine hochaktiven Katalysator-Systeme ergeben (EP-B-0 069 951).

In J. Polymer Science, 23, No. 8 (S. 2120) wird dazu ausdrücklich festgestellt: "Simple synthetic routes to the methyl aluminoxane [-O-Al(CH₃)-]ₙ are not available owing to the extremely high reactivity of the parent trimethylalane. This notwithstanding, the synthesis through direct reaction between Al(CH₃)₃ and H₂O in a 1 : 1 molar ratio in toluene solution has been reported. We found this method not very reliable. The degree of oligomerization of the resulting aluminoxane was scarcely reproducible and the reaction rather uncontrollable."

Diese Mängel sollten beseitigt werden durch Umsetzung von Trimethylaluminium (TMA) mit kristallwasserhaltigen Salzen, wie Aluminiumsulfat-Hydrat (EP-A-0 108 339) oder allgemein Hydraten von solchen Salzen, die unter den Umsetzungsbedingungen nicht reduziert werden (EP-A-0 0 208 561), oder in einer anderen Verfahrensweise durch Umsetzung von TMA mit anorganischen Stoffen, die durch Absorption oder Adsorption gebundenes Wasser enthalten, wie feinteiliges Siliziumdioxid (WO-A-89/02453), Aluminiumoxid (WO-A-89/02453), Aluminiumhydroxid (EP-A-0 315 234) oder Molekularsiebe (Diss. I. Herwig, Universität Hamburg, 1979).

Letztgenannte Herstellungsmethoden bedingen natürlich einen zusätzlichen technischen und kostenmäßigen Aufwand; sie weisen den erheblichen Nachteil auf, daß die eingesetzten Feststoffe in der Regel zur guten Dosierbarkeit zerkleinert und gesiebt werden müssen (speziell kristallwasserhaltige Salze) und zudem ihr Wassergehalt zur gezielten und reproduzierbaren Umsetzung genau eingestellt und kontrolliert werden muß. Außerdem sind lange Reaktionszeiten und, zumindest zu Beginn der Reaktion, häufig tiefe Temperaturen erforderlich (EP-A 0 315 234, WO-A-89/02453), wodurch nicht nur entsprechend geringere Raum/Zeit-Ausbeuten, sondern auch ein erhöhter technischer bzw. energetischer Aufwand resultieren.

Es bestand daher ein Bedürfnis nach einem einfachen Verfahren zur Herstellung von oligomerem MAO, welches in guter Ausbeute ein Produkt ergibt, das in inerten Kohlenwasserstoffen löslich ist und mit speziellen Übergangsmetall-Verbindungen hochaktive Katalysator-Systeme zur Polymerisation von Olefinen ergibt.

In der US-A-4 772 736 wird ein Verfahren zur Herstellung von Alkylaluminoxanen beschrieben, bei welchem Wasser unter der Oberfläche einer gerührten Lösung einer Alkylaluminiumverbindung direkt in das Scherfeld eines Rührers dosiert wird, so daß das Wasser unmittelbar beim Kontakt mit der Lösung dispergiert wird. Bei diesem Verfahren werden immer noch relativ hohe Anteile an unlöslichen Alkylaluminoxanen erhalten.

Um diese Probleme zu lösen werden gemäß dem erfindungsgemäßen Verfahren Lösungen oligomerer, gegebenenfalls höhere Alkylgruppen enthaltender Methylaluminoxane (MAO), die Trimethylaluminium (TMA) in freier und/oder komplexierter Form enthalten, hergestellt, indem man einer im Kreislauf geförderten Lösung von Trimethylaluminium und gegebenenfalls weiteren Aluminiumalkylen in aliphatischen, cycloaliphatischen oder aromatischen Kohlenwasserstoffen Wasser im Bereich eines im externen Kreislauf von einem Flüssigkeitsförderer (Rotor-Stator-Reaktionsmaschine) erzeugten Turbulenzfeldes zuführt. Die erhaltenen klaren Lösungen von oligomerem MAO können direkt ohne weitere Reinigungsschritte zur Herstellung von Polymerisationskatalysatoren eingesetzt werden.

Die Edukte werden dabei in solchen Mengen eingesetzt, daß die Konzentration des MAO im verwendeten Lösungsmittel im Bereich von 1 bis 20 Gew.-% liegt, vorzugsweise 1 bis 10 Gew.-%. Die Konzentrationen können anschließend durch Abkondensation des Lösungsmittels unter schonenden Bedingungen erhöht werden, vorzugsweise auf 10 bis 50 Gew.-% MAO. Selbst festes Methylaluminoxan (MAO) kann auf diese Weise durch vollständige Entfernung des Lösungsmittels erhalten werden. Nicht umgesetztes TMA, das beim Abkondensieren des Lösungsmittels z. T. mit übergeht, kann vorteilhaft wieder zur Herstellung von MAO verwendet werden.

Als Lösungsmittel kommen aromatische Kohlenwasserstoffe, insbesondere Alkylbenzole, z. B. Toluol oder Xyclol, sowie gesättigte aliphatische und cycloaliphatische Kohlenwasserstoffe, beispielsweise Heptan, in Betracht.

Die Reaktion wird vorzugsweise durchgeführt, indem man Wasser langsam zu einer Lösung von TMA in einem der oben erwähnten Kohlenwasserstoffe gibt, wobei die Umsetzungstemperatur in einem Bereich von -50 °C bis 100 °C gehalten wird. Es ist jedoch in der Regel ausreichend, bei einer Temperatur von 0 bis 50 °C zu arbeiten.

Um angesichts der relativ hohen Exothermie der Reaktion von TMA mit Wasser unkontrollierte Reaktionen zu vermeiden, sollte die Zugabe des Wassers zu der Lösung von TMA langsam erfolgen und gleichzeitig für eine ausreichende Wärmeabfuhr gesorgt werden. Anfallende unlösliche Nebenprodukte werden durch übliche Maßnahmen, wie Filtration, Zentrifugieren oder Dekantieren, von der Lösung abgetrennt.

Wegen der Reaktivität von TMA und MAO gegenüber Luftsauerstoff ist bei der Herstellung von MAO unter Inertgasatmosphäre zu arbeiten.

Das erhaltene Reaktionprodukt ist eine Lösung eines oligomeren Methylaluminoxans (MAO), die nicht umgesetztes TMA in freier und/oder komplexierter Form enthält. Eine solche Lösung eignet sich besonders gut als Katalysator-Komponente für die Herstellung hochaktiver Polyolefin-Katalysatoren. Das MAO kann auch in fester Form isoliert werden. Der Feststoff ist ein Oligomer mit einem mittleren Molekulargewicht von etwa 800 bis 3000 g/Mol.

Nach dem erfindungsgemäßen Verfahren lassen sich auch Methylaluminoxane herstellen, die zusätzlich höhere Alkylgruppen (z. B. Ethyl, Butyl, Isobutyl, Hexyl, Octyl) im Bereich 5 - 20 Mol-% bez. auf Methyl, vorzugsweise 10 - 15 Mol-%, enthalten. Aus dem Einbau der höheren Alkylgruppen resultiert eine bessere Löslichkeit in Kohlenwasserstoffen, die insbesondere bei aliphatischen Kohlenwasserstoffen, beispielsweise Heptan, von Vorteil ist, da reines MAO in solchen Lösungsmitteln nur schlecht löslich ist.

Im Gegensatz zu der bisher in der Fachwelt vorherrschenden Auffassung, wonach zur Herstellung eines aktiven MAO ein Molverhältnis H₂O/TMA von etwa 1 einzuhalten ist (US-A-3 242 099, EP-A- 0 241 560, EP-A-0 208 561) und wonach durch Zugabe von Wasser zu TMA - siehe z. B. US-A-3 242 099 oder J. Polymer Science, 23, No. 8 S. 2120) - kein katalytisch wirksames MAO zu erhalten sei, mußte es überraschen, daß nach dem erfindungsgemäßen einfachen und kostengünstigen Verfahren durch Umsetzung von TMA und Wasser bei einem Molverhältnis H₂O/TMA von bevorzugt 0,65 bis 0,75 Lösungen von MAO erhältlich sind, die sich in Verbindung mit speziellen Übergangsmetall-Komplexen durch eine hohe katalytische Aktivität bei der Polymerisation von Olefinen auszeichnen. Man erhält in diesem Bereich ein sehr aktives MAO, das ein ausreichend hohes mittleres Molekulargewicht und eine gute Löslichkeit in Alkylbenzolen, z. B. Toluol, aufweist.

Es wurde gefunden, daß oberhalb eines Molverhältnisses H₂O/TMA von 0,75, insbesondere nahe bei einem Molverhältnis von 1, die Ausbeute an löslichem MAO drastisch absinkt. Die Umsetzung verläuft zudem unter starker Schaumbildung, und eine sehr starke Ausfällung von weißem Feststoff tritt in Erscheinung.

Senkt man dagegen das Molverhältnis H₂O/TMA unter den erfindungsgemäßen Bereich von 0,65 bis 0,75, so nimmt die Ausbeute an MAO rapide ab, womit das Verfahren unwirtschaftlich wird.

Da es von Vorteil ist, für eine gute Durchmischung der Reaktanden zu sorgen, wurden für die Herstellung von MAO verschiedene technische Maßnahmen vorgeschlagen, wie beispielsweise Ultraschall (EP-A-0 257 695) oder Rührer mit sehr hohen Umdrehungsgeschwindigkeiten ("high shear-inducing impeller" - EP-A 0 258 924).
Eine weitere Verbesserung des erfindungsgemäßen Verfahrens durch Verwendung dieser Techniken konnte jedoch nicht festgestellt werden. Es ergaben sich lediglich Ausbeuten an MAO von 42 % bzw. 44 % d. Th., bezogen auf isolierten Feststoff.
Arbeitet man mit den oben angeführten Vermischungstechniken gemäß EP-A-0 257 695 und EP-A-0 258 924 nach den dort gegebenen Vorschriften und Einsatzverhältnissen, so erhält man im übrigen MAO-Lösungen sehr geringer Konzentration (1 - 2 Gew.-%).
Besonders gute Umsetzungsergebnisse erhält man nun überraschenderweise, und zwar auch außerhalb des bevorzugten Bereichs für das Molverhältnis H₂O/TMA von 0,65 bis 0,75, wenn man der eingesetzten im Kreislauf geförderten Lösung von TMA in einem Kohlenwasserstoff das zur Reaktion erforderliche Wasser im Bereich eines Turbulenzfeldes, welches im externen Kreislauf von einem Flüssigkeitsförderer erzeugt wird, zuführt. Zur Erzeugung eines derartigen Turbulenzfeldes ist insbesondere eine Rotor/Stator-Reaktionsmaschine geeignet. Eine derartige Rotor/Stator-Reaktionsmaschine ist in Aufbau und Funktion beispielsweise in DE-A-2 363 888 beschrieben.

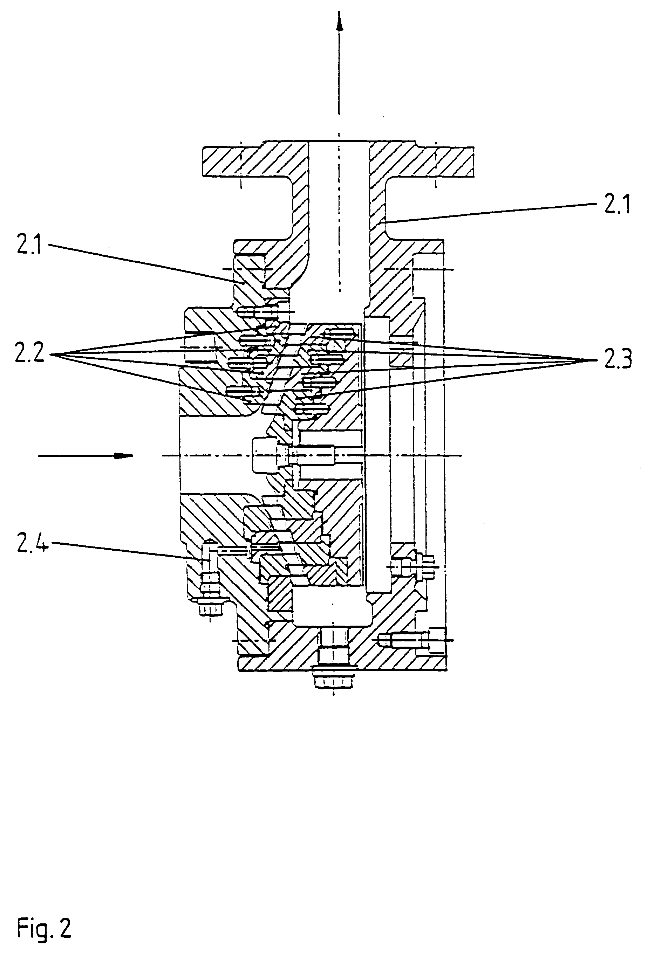

Wie aus Figur 2 ersichtlich, befinden sich in einem Gehäuse (2.1) je ein Stator- (2.2) und ein Rotor-Werkzeugsatz (2.3). Beide Werkzeugsätze bestehen aus konzentrisch angeordneten, ringförmigen Einzelwerkzeugen, die mit radial eingefrästen Schlitzen oder Bohrungen versehen sind. Sie sind konstruktiv so ausgebildet, daß sie mit geringem Spaltabstand zueinander arbeiten.

Der Stator-Werkzeugsatz ist feststehend in der Maschine montiert, während der Rotor-Werkzeugsatz mit hoher Drehzahl angetrieben wird. Dabei rotiert der Rotor-Werkzeugsatz in den Ringspalten zwischen den Stator-Einzelwerkzeugringen derart, daß ein Werkzeugring im Zwischenraum von zwei anderen Werkzeugringen arbeitet.

Bei Durchgang durch die Maschine werden die Reaktionskomponenten alternierend in den Rotor-Werkzeugen zentrifugal beschleunigt und in hohe Umfangsgeschwindigkeit versetzt, um im nächsten feststehenden Stator-Werkzeug wieder abgebremst und in radiale Richtung gelenkt zu werden. Dabei werden hohe Scherkräfte aufgebaut. Dieser Vorgang erfolgt aufgrund der Drehzahl und der Werkzeugkonfiguration so häufig, daß eine besonders gute Produktverwirbelung erfolgt und ein Reaktand, der durch eine Dosierbohrung (4) an geeigneter Stelle im Gehäuse in das System eingebracht wird, in Bruchteilen von Sekunden in die durch die Maschine strömende Reaktionsmischung homogen eingearbeitet und spontan zur Reaktion gebracht werden kann. Ob die Maschine innerhalb eines konventionellen Rührbehälters oder extern aufgestellt wird, ist dabei nicht von Belang.

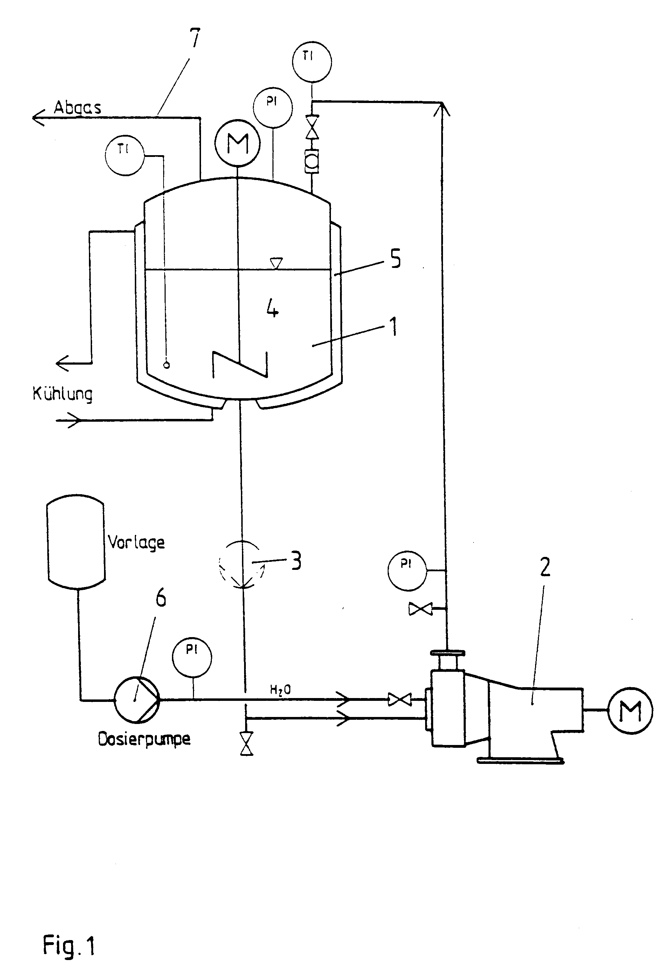

Das erfindungsgemäße Verfahren wird im folgenden anhand von Figur 1 näher erläutert.

Zweckmäßig wird die TMA-Lösung in einem konventionellen Rührbehälter (1) vorgelegt, der mit der Rotor/Stator-Reaktionsmaschine (2) im Verbund arbeitet, wobei der Inhalt des Rührbehälters der Rotor/Stator-Reaktionsmaschine durch freien Zulauf oder mit einer Pumpe zugeführt (3) und nach Verlassen der Reaktionsmaschine in den Rührbehälter zurückgeführt wird.

Die Reaktion von TMA mit Wasser erfolgt in der extern aufgestellten Reaktionsmaschine (2), in die das Wasser im Bereich des Turbulenzfeldes mit einer Dosierpumpe (6) eindosiert wird. Die zuvor beschriebene homogene Einarbeitung des Wassers wird dabei durch die bei der Umsetzung mit TMA erfolgende Entwicklung des Gases Methan unterstützt und verstärkt. Der durch die Reaktionsmaschine strömende Rührbehälterinhalt (4) fließt dann wieder in den Rührbehälter (1) zurück, wo die entstandene Reaktionswärme und die zusätzlich durch Antriebsleistung eingetragene Wärme durch entsprechende Wärmeaustauschflächen (5) abgeführt und eventuell entstandene Abgasmengen von der Flüssigkeit separiert und über die Abgasfortleitung (7) entfernt werden.

Wie aus den Beispielen 1 und 2 ersichtlich, stellt dieses Verfahren unter Verwendung einer Rotor/Stator-Reaktionsmaschine eine überraschend einfache Variante zur wirtschaftlichen Herstellung von MAO aus TMA und Wasser im technischen Maßstab dar. Es ist insbesondere gekennzeichnet durch hohe Ausbeuten und hohe Raum-Zeit-Ausbeuten an MAO. Feste Nebenprodukte fallen nur in untergeordnetem Maße an. Der technisch sehr einfache Aufbau bei gleichzeitig gut steuerbarer Reaktionsführung gestattet bei sehr kurzen Reaktionszeiten die Herstellung von MAO in reproduzierbarer Qualität. Dabei läßt sich eine Erhöhung der Ausbeute an löslichem MAO um mehr als 20 % erreichen. Weiterhin ist die Reaktion bequem bei Raumtemperatur durchführbar, was eine deutliche Einsparung an Kühlenergie mit sich bringt.

### Beispiel 1

In einem 100 l-Edelstahlreaktor, gekoppelt mit einer Rotor-Stator-Maschine (Typ Supraton, Fa. Krupp) wurde eine Lösung von 7,6 kg (105,5 mol) TMA in 40,0 kg Toluol mit 1,211 kg (67,3 mol) dest. Wasser zur Reaktion gebracht. Die Wasserdosierung erfolgte mit Hilfe einer Kolbendosierpumpe (Typ Lewa, 3 mm Kap.durchmesser, Dosierdauer: 3,5 h, 30 min Nachreaktionszeit). Nach Filtration wurden 41,5 kg MAO Lösung mit einem Gehalt von 5,5 Gew.-% Al erhalten (82 % d. Th. bez. Al). Durch schonende Vakuumdestillation eines aliquoten Teils der Lösung wurde der Gehalt an festem oligomerem MAO zu 11,1 Gew.-% bestimmt (68 % d. Th. bez. Al).

### Beispiel 2

Es wurde analog verfahren, wie in Beispiel 1, lediglich mit dem Unterschied, daß das Molverhältnis H₂0/TMA 0,5 betrug. Nach Aufarbeitung resultierte eine Lösung, die 5,4 Gew.-% Al enthielt (87 % d. Th. bez. Al). Entfernung des Lösungsmittels aus 155 g Filtrat lieferte 12,5 g MAO-Feststoff (51 % d. Th. bez. Al).

## Patentansprüche

1. Verfahren zur Herstellung von Lösungen oligomerer, gegebenenfalls höhere Alkylgruppen enthaltender Methylaluminoxane, die Trimethylaluminium in freier und/oder komplexierter Form enthalten in Kohlenwasserstoffen, indem man einer im Kreislauf geförderten Lösung von Trimethylaluminium und gegebenenfalls weiteren Aluminiumalkylen in aliphatischen, cycloaliphatischen oder aromatischen Kohlenwasserstoffen Wasser im Bereich eines im externen Kreislauf von einem Flüssigkeitsförderer erzeugten Turbulenzfeldes zuführt, dadurch gekennzeichnet, daß als Flüssigkeitsförderer eine Rotor/Stator-Reaktionsmaschine mit rotierenden und feststehenden Werkzeugen, bei der ein Stator-(2.2) und ein Rotor-Werkzeug (2.3), bestehend aus konzentrisch angeordneten ringförmigen Einzelwerkzeugen gestaffelten Durchmessers, die mit radial eingefrästen Schlitzen oder Bohrungen versehen sind und mit geringfügigem Spaltenabstand arbeiten, verwendet wird.

2. Verfahren gemäß Anspruch 1, dadurch gekennzeichnet, daß bei der Umsetzung ein Wasser/Aluminiumalkyl-Molverhältnis von 0,65 bis 0,75 eingehalten wird.

3. Verfahren gemäß Anspruch 1, dadurch gekennzeichnet, daß man die Konzentration der Lösung auf 10 - 50 Gew.-% Methylaluminoxan einstellt.

4. Verfahren zur Herstellung von oligomeren, in Kohlenwasserstoffen löslichen Methylaluminoxanen, dadurch gekennzeichnet, daß man die Methylaluminoxane aus den nach den Ansprüchen 1 und 2 erhaltenen Lösungen durch Entfernung des Lösungsmittels in fester Form isoliert.

## Claims

1. Process for the preparation of solutions of oligomeric methyl aluminoxanes optionally containing higher alkyl groups, which solutions contain trimethylaluminium in free and/or complexed form, in hydrocarbons, by conveying water to a circulated solution of trimethylaluminium and optionally other aluminium alkyls in aliphatic, cycloaliphatic or aromatic hydrocarbons in the region of a field of turbulence produced in the external circuit of a liquid conveyor, characterised in that there is used as liquid conveyor a rotor/stator reaction machine having rotating and stationary tools, which machine has a stator tool (2.2) and a rotor tool (2.3) comprising concentrically arranged annular individual tools of graduated diameter that are provided with radially sunk slots or bores and operate with a slight gap between them.

2. Process according to claim 1, characterised in that a water/aluminium alkyl molar ratio of from 0.65 to 0.75 is maintained during the reaction.

3. Process according to claim 1, characterised in that the concentration of the solution is adjusted to from 10 to 50 % by weight of methyl aluminoxane.

4. Process for the preparation of oligomeric methyl aluminoxanes soluble in hydrocarbons, characterised in that the methyl aluminoxanes are isolated in solid form from the solutions obtained according to claims 1 and 2 by removing the solvent.

## Revendications

1. Procédé pour la préparation de solutions de méthylaluminoxanes oligomères, éventuellement contenant des groupes alkyle supérieurs, qui contiennent le triméthylaluminium sous forme libre et/ou de complexe dans des hydrocarbones, en amenant de l'eau dans une solution circulant dans un circuit de triméthylaluminium et éventuellement d'autres alkylaluminiums dans des hydrocarbones aliphatiques, cycloaliphatiques ou aromatiques, laquelle eau est introduite dans la zone d'un champ de turbulences produit par un appareil de transport de liquides dans un circuit externe, caractérisé en ce qu'on utilise en tant qu'appareil de transport de liquides une machine à réaction avec rotor/stator comportant des assemblages rotatives et fixes, dans laquelle on utilise un assemblage d'un stator (2.2) et un assemblage d'un rotor (2.3), composés d'assemblages individuels annulaires à disposition concentrique, à diamètre échelonné, dans lesquels sont ménagées des perforations et des fentes fraisées radialement et qui travaillent avec un jeu très faible.

2. Procédé selon la revendication 1, caractérisé en ce qu'on maintient dans la réaction un rapport molaire de 0,65 à 0,75 de l'eau/alkylaluminium.

3. Procédé selon la revendication 1, caractérisé en ce qu'on établit la concentration de la solution à 10 à 50 % en poids en méthylaluminoxane.

4. Procédé pour la préparation de méthylaluminoxanes oligomères solubles dans des hydrocarbones, caractérisé en ce qu'on isole les méthylaluminoxanes des solutions obtenues selon les revendications 1 et 2, sous forme solide par élimination du solvant.
